# EUROPÄISCHE PATENTSCHRIFT

(11) **EP 0 824 947 B1**
(45) Veröffentlichungstag und Bekanntmachung des Hinweises auf die Patenterteilung: **09.10.2002**
(21) Anmeldenummer: 97112120.7
(22) Anmeldetag: 16.07.1997
(51) Int. Cl.: B01D 17/02

(54) **Flüssigkeitsabscheider sowie in diesen einbaubare Separationsvorrichtung**
Liquid separator and separation device mountable therein
Séparateur de liquides et dispositif de séparation incorporable dans celui-ci

(30) Priorität: 16.08.1996 DE 19632911
(43) Veröffentlichungstag der Anmeldung: 25.02.1998
(73) Patentinhaber: Benkeser, Michael, Dipl.-Ing. (FH), D-77886 Lauf (DE)
(72) Erfinder: Benkeser, Michael, Dipl.-Ing. (FH), D-77886 Lauf (DE)
(74) Vertreter: Dipl.-Ing. Heiner Lichti Dipl.-Phys. Dr.rer.nat. Jost Lempert Dipl.-Ing. Hartmut Lasch

(56) Entgegenhaltungen:
- EP-A- 0 625 365
- DE-A- 2 611 685
- DE-A- 2 910 307
- DE-A- 4 200 379

## Beschreibung

Die Erfindung betrifft einen Flüssigkeitsabscheider insbesondere zum Trennen von Gemischen aus Wasser und spezifisch leichteren Flüssigkeiten wie Öl, Benzin oder dergleichen, gemäß dem Oberbegriff des Anspruchs 1. Darüber hinaus betrifft die Erfindung eine Separationsvorrichtung zum Einbau in einen derartigen Flüssigkeitsabscheider.

Um den geltenden Abwasservorschriften genügen zu können, werden in Bereichen, in denen mit Leichtflüssigkeit, insbesondere Öl oder Benzin, verschmutzte Abwasser anfallen, Flüssigkeitsabscheider zum Trennen von Öl- oder Benzin-Wasser-Gemischen eingesetzt. Dabei wir durch die physikalische Vorgänge der Sedimentation sowie des Aufschwimmens bei sogenannten reinen Schwerkraftabscheidern bzw. der Sedimentation, des Aufschwimmens, der Flotation, der Adsorption sowie aufgrund von Auftriebskräften in sogenannten Koaleszenzabscheidern, bei denen Koaleszenzfilter eingesetzt werden, erreicht, daß verunreinigte Abwässer gereinigt werden können. Bei der Reinigung von beispielsweise ölbelasteten Abwässern schwimmt das Öl in dem Abscheiderbehälter des Flüssigkeitsabscheiders zu einer oberen Schicht auf, während das gesäuberte Abwasser über einen Auslauf aus dem Abscheiderbehälter abfließen kann. Die Ölschicht, die sich im Laufe der Zeit an der Oberfläche der im Abscheiderbehälter befindlichen Flüssigkeit bildet, kann je nach Art des Flüssigkeitsabscheiders eine Dicke von mehreren Zentimetern oder gar Dezimetern erreichen.

Wenn die Ölschicht auf eine vorbestimmte Dicke angewachsen ist, ist es notwendig, das abgeschiedene Öl aus dem Flüssigkeitsabscheider zu entfernen. Zu diesem Zweck wurde früher das Öl mit Hilfe einer externen Saugvorrichtung, beispielsweise einem Saugwagen, zusammen mit der im Flüssigkeitsabscheider befindlichen Flüssigkeit vollständig abgesaugt. Das Absaugen des Öls ist sehr kostenintensiv und zeitaufwendig, wobei der Flüssigkeitsabscheider in dem Zeitraum zwischen dem Erreichen der vorbestimmten Dicke der Ölschicht und der Beendigung des Absaugens nicht genutzt werden kann, so daß relativ lange Totzeiten entstehen.

Um die Abführung bzw. Entsorgung der sich im Abscheiderbehälter ansammelnden Ölschicht zu verbessern, ist vorgeschlagen worden, das Öl permanent oder periodisch in einen separaten Öl-Sammelbehälter abfließen zu lassen. Der Sammelbehälter kann dabei entweder innerhalb des Abscheiderbehälters (DE 26 11 685 A1) oder außerhalb von diesem angeordnet sein (DE 42 00 379 A1). In beiden Fällen ist in dem Abscheiderbehälter des Flüssigkeitsabscheiders genau in derjenigen Höhe, in der sich die Ölschicht einstellt bzw. theoretisch einstellen wird, ein Abfluß oder Überlauf vorgesehen, durch den das Öl in den Sammelbehälter abfließen kann. Mit einem derartigen Überlauf ist jedoch der Nachteil verbunden, daß eine relativ großen Menge an gereinigtem oder zu reinigendem Wasser ebenfalls in den Sammelbehälter fließt, wodurch einerseits der separate Sammelbehälter relativ schnell gefüllt ist und andererseits sich im Sammelbehälter ein Wasser-Öl-Gemisch ansammelt, das eine aufwendige Entsorgung oder Aufbereitung notwendig macht.

Aus der DE 29 10 307 A1, von der im Oberbegriff des Anspruchs 1 ausgegangen wird, ist ein Flüssigkeitsabscheider bekannt, bei dem auf der im Abscheiderbehälter befindlichen Flüssigkeit ein Schwimmer vorgesehen ist, über den das Öl abgenommen und einem Sammelbehälter zugeführt werden kann. Dabei ist zwischen dem Schwimmer und dem Sammelbehälter eine Separationskammer angeordnet, in der eine nochmalige Trennung der Leichtflüssigkeit von dem durch den Schwimmer mit eingeströmten Wasser erfolgt. Die in der Separationskammer aufsteigende Leichtflüssigkeit fließt durch eine obere, zum Sammelbehälter führende Abflußleitung ab, während das Wasser an einer unteren Abflußleitung aus der Separationskammer austritt. Wenn sich jedoch in der Separationskammer in einem Betriebszustand bereits relativ viel Wasser befindet und der Flüssigkeitsspiegel in der Separationskammer durch Zuführung weiterer Flüssigkeit schlagartig ansteigt, ist auch hier die Gefahr gegeben, daß Wasser durch die obere Abflußleitung in den Sammelbehälter eintritt, womit die genannten Nachteile verbunden sind.

Der Erfindung liegt die Aufgabe zugrunde, einen Flüssigkeitsabscheider der genannten Art zu schaffen, bei dem sichergestellt ist, daß sich im Sammelbehälter im wesentlichen nur Leichtflüssigkeit ansammelt. Darüber hinaus soll eine in einen Flüssigkeitsabscheider einbaubare Separationsvorrichtung geschaffen werden, mit der bestehende Flüssigkeitsabscheider zu dem genannten Zweck nachgerüstet werden können.

Diese Aufgabe wird erfindungsgemäß bei einem Flüssigkeitsabscheider mit den kennzeichnenden Merkmalen des Anspruchs 1 gelöst.

Auch bei dem erfindungsgemäßen Flüssigkeitsabscheider ist der Überlauf nahe dem sich im Abscheiderbehälter einstellenden Ruhewasserspiegel, d.h. derjenigen Höhe, in der sich die Leichtflüssigkeitsschicht einstellen wird, vorgesehen. Wenn der Flüssigkeitsspiegel im Abscheiderbehälter durch zulaufendes, verunreinigtes Abwasser kurzfristig ansteigt, kann die sich bereits angesammelte Leichtflüssigkeit in den Überlauf gelangen. Dabei kann neben der Leichtflüssigkeit auch ein gewisser Anteil an Wasser einfließen. In bekannter Weise wird die in den Überlauf eintretende Leichtflüssigkeit jedoch nicht direkt in den Sammelbehälter geleitet, sondern fließt zunächst in eine Separationskammer. In der Separationskammer erfolgt eine nochmalige Trennung der Leichtflüssigkeit von dem Wasser, wobei die Leichtflüssigkeit aufsteigt und sich innerhalb der Separationskammer an der Oberfläche ansammelt. Die Separationskammer besitzt zwei Abflußöffnungen. Eine obere Abflußöffnung, in die die Leichtflüssigkeit eintreten kann, führt zu dem Sammelbehälter. Über eine untere Abflußöffnung kann das Wasser in den normalen Strömungsverlauf zurückgeführt werden.

Dabei ist vorgesehen, daß in der Separationskammer ein Schwimmer angeordnet ist, der die obere, zu dem Sammelbehälter führende Abflußöffnung bis zum Erreichen einer vorbestimmten Dicke der Leichtflüssigkeitsschicht in der Separationskammer verschlossen hält. Dies bringt insbesondere den Vorteil mit sich, daß in der Anfangsphase des Betriebs des Flüssigkeitsabscheiders, in der sich noch keine sehr starke Leichtflüssigkeitsschicht in der Separationskammer gebildet hat, kein Wasser in den Sammelbehälter einströmen kann. Erst wenn die Leichtflüssigkeitsschicht in der Separationskammer ausreichend stark ist, sinkt der Schwimmer ab und öffnet somit die obere Abflußöffnung, so daß die Leichtflüssigkeit in die obere Abflußöffnung eintreten und in den Sammelbehälter fließen kann. Wenn soviel Leichtflüssigkeit abgeflossen ist, daß die Dicke der Leichtflüssigkeitsschicht unter den vorbestimmten Wert sinkt, verschließt der Schwimmer die obere Abflußöffnung wieder, so daß die Leichtflüssigkeitsschicht wieder im Laufe der Zeit anwächst. Auf diese Weise ist sichergestellt, daß im Separationsbehälter immer eine ausreichende Leichtflüssigkeitsschicht vorhanden ist, wenn die obere Abflußöffnung geöffnet ist. Es hat sich gezeigt, daß durch diese Ausgestaltung der Separationskammer erreicht wird, daß sich im Sammelbehälter im wesentlichen nur Leichtflüssigkeit ansammelt, so daß sich diese in einfacher Weise weiterverarbeiten oder entsorgen läßt.

In Weiterbildung der Erfindung kann vorgesehen sein, daß in der Separationskammer ein Schwimmer angeordnet ist, der die untere Abflußöffnung bei Erreichen einer vorbestimmten Dicke der Leichtflüssigkeitsschicht in der Separationskammer verschließt. Auf diese Weise kann verhindert werden, daß Leichtflüssigkeit in die untere Abflußöffnung eintritt, wenn der Sammelbehälter überfüllt sein sollte und sich die Leichtflüssigkeit in die Separationskammer zurückstaut.

Bei dem Schwimmer für die obere und die untere Abflußöffnung kann es sich um das gleiche Bauteil, d.h. einen einzigen Schwimmer handeln, alternativ ist es jedoch auch möglich, zwei separate Schwimmer vorzusehen.

Die in den Überlauf eintretende Leichtflüssigkeit fließt durch eine Zulaufleitung in die Separationskammer. Die zulaufleitung verläuft dabei vorzugsweise von dem Ruhewasserspiegel im Abscheiderbehälter nach unten und mündet in der unteren Hälfte der Separationskammer. Auf diese Weise ist oberhalb der Mündung der Zulaufleitung in der Separationskammer noch ausreichend Raum vorhanden, in den sich die Leichtflüssigkeit ansammeln kann.

Gegebenenfalls kann in der Zulaufleitung ein Filter angeordnet sein, mit dem insbesondere gröbere Verunreinigungen zurückgehalten werden.

In Weiterbildung der Erfindung ist vorgesehen, daß in der Zulaufleitung eine untere, von der Flüssigkeit vor Eintritt in die Separationskammer zu unterströmende Schwelle angeordnet ist.

Das durch die untere Abflußöffnung der Separationskammer abfließende Wasser kann direkt in den Abscheiderbehälter zurückgeführt werden, wobei dies vorzugsweise im Bereich des Auslaufs des Flüssigkeitsabscheiders erfolgen sollte. In bevorzugter Ausgestaltung der Erfindung ist jedoch vorgesehen, daß die untere Abflußöffnung über eine Abflußleitung direkt mit der Außenseite des Abscheiderbehälters verbunden ist. Da das durch die untere Abflußöffnung hindurchfließende Wasser bereits sehr gut von der Leichtflüssigkeit gereinigt ist, kann es direkt aus dem Abscheiderbehälter entnommen werden. Dabei ist zu beachten, daß der Ruhewasserspiegel N₂ in der Abflußleitung dem Ruhewasserspiegel in der Separationskammer und somit auch in deren Zulaufleitung entspricht. Es ist deshalb vorzugsweise vorgesehen, daß der Ruhewasserspiegel N₂ der Abflußleitung geringfügig tiefer als der Ruhewasserspiegel N₁ im Abscheiderbehälter liegt.

Es hat sich bewährt, in der Abflußleitung eine Querschnittsverengung auszubilden. Damit ist der Vorteil verbunden, daß die Durchflußmenge in der Abflußleitung und somit auch in der Separationskammer sehr gering ist, so daß der Separationsvorgang nicht gestört ist und keine Leichtflüssigkeit in die Abflußleitung mitgerissen werden kann.

Die Separationskammer kann durch Trennwände innerhalb des Abscheiderbehälters ausgebildet sein. Vorzugsweise ist jedoch vorgesehen, daß die Separationskammer in einem eigenen, in den Abscheiderbehälter eingesetzten Separationsbehälter ausgebildet ist. Dies bringt unter anderem den Vorteil mit sich, daß der Separationsbehälter zum Zwecke der Wartung oder Reparatur leicht aus dem Flüssigkeitsabscheider entnommen werden kann. Darüber hinaus ist die Separationskammer auf diese Weise unabhängig von dem eigentlichen Abscheidersystem und stellt ein eigenes Bauteil dar, mit dem bereits bestehende Flüssigkeitsabscheider jederzeit nachgerüstet werden können.

Erfindungsgemäß ist deshalb auch eine Separationsvorrichtung zum Einbau in einen Flüssigkeitsabscheider der genannten Art vorgeschlagen, wobei ein in den Abscheiderbehälter einsetzbarer Separationsbehälter mit einer inneren Separationskammer vorgesehen ist, die über eine Zulaufleitung mit dem Überlauf verbunden ist und eine obere, zum Sammelbehälter führende Abflußöffnung für die Leichtflüssigkeit und eine untere Abflußöffnung für das Wasser aufweist, wobei in der Separationskammer ein Schwimmer angeordnet ist, der die obere, zu dem Sammelbehälter führende Abflußöffnung bis zum Erreichen einer vorbestimmten Diche der Leichtflüssigkeitsschicht in der Separationsskammer verschlossen hält.

Weitere konstruktive Merkmale der Separationsvorrichtung ergeben sich aus der vorgenannten Beschreibung des Flüssigkeitsabscheiders.

Mit dem erfindungsgemäßen Flüssigkeitsabscheider bzw. der in diesen einbaubaren Separationsvorrichtung sind verschiedene weitere Vorteile gegeben. Zum einen stellt sich aufgrund des ständigen Abflusses von Leichtflüssigkeit durch den Überlauf im Abscheiderbehälter eine von Öl bzw. Leichtflüssigkeit nahezu freie Wasseroberfläche ein, d.h. daß im eigentlichen Abscheiderraum praktisch keine Leichtflüssigkeit vorhanden ist. Auch wenn durch relativ scharfe Reiniger oder Reinigungsemulsionen verunreinigtes Abwasser in den Abscheiderbehälter einfließt, kann es somit nicht zu einem Emulgieren der bereits abgeschiedenen Leichtflüssigkeit und einem damit verbundenen Herauslösen von Kohlenwasserstoffen und Schwermetallen aus der Trennfläche Wasser/Leichtflüssigkeit kommen.

Wie bereits erwähnt, ist erfindungsgemäß erreicht, daß sich im Sammelbehälter kein Wasser befindet, so daß bei der Entleerung des Sammelbehälters nur Leichtflüssigkeit, insbesondere Öl zu entsorgen ist. Da sich im Abscheiderbehälter keine Leichtflüssigkeit befindet, braucht das dort befindliche Wasser nicht entsorgt zu werden, wodurch die Stillstandszeiten des Flüssigkeitsabscheiders bei der Entsorgung und deren Kosten sehr gering sind.

Die in den Flüssigkeitsabscheider einbaubare Separationsvorrichtung kann sehr kompakt und mit geringen Abmessungen ausgestaltet werden, so daß sie in Flüssigkeitsabscheider unterschiedlicher Bauart nachträglich in einfacher Weise eingebaut werden kann. Darüber hinaus ist es möglich, den Separationsbehälter in einem Bereich des Abscheiderbehälters anzuordnen, in der die Beeinflussung der eigentlichen Abscheide- bzw. Reinigungsleistung gering ist.

Die Separationsvorrichtung ist als Modul in ihrer Gesamtheit austauschbar und besitzt einen sehr einfachen konstruktiven Aufbau mit entsprechend hoher Funktionssicherheit. Sie ist darüber hinaus in Flüssigkeitsabscheidern unabhängig davon verwendbar, ob deren selbsttätige Verschlußvorrichtung am Ablauf oder am Zulauf angeordnet ist.

Es hat sich gezeigt, daß eine sehr gute Separation auch bereits bei sehr geringen Zuflüssen von Wasser oder Leichtflüssigkeit in den Flüssigkeitsabscheider zu erzielen ist. Dabei braucht der Durchfluß durch die Separationsvorrichtung nur sehr gering zu sein, damit an der Wasseroberfläche des Abscheiderbehälters schwimmende Leichtflüssigkeit in die Separationsvorrichtung zuverlässig abfließt.

Die Ölseparationsvorrichtung kann auch bei einer hohen Wasserzuflußmenge im Flüssigkeitsabscheider nicht überlastet werden. Falls der Flüssigkeitsabscheider mehr Zufluß erhält, als er verarbeiten kann, so staut das Wasser lediglich auf. Die Separationsvorrichtung arbeitet auch in diesem Fall normal weiter. Darüber hinaus hat sich gezeigt, daß die Wirkungsweise der Separationsvorrichtung auch bei einem sehr geringen Höhenunterschied zwischen dem Einlauf und dem Auslauf des Flüssigkeitsabscheiders gesichert ist, wobei an sich einige Millimeter ausreichen, sich in der Praxis jedoch eine Vorgabe von 20 mm als zweckmäßig erwiesen hat.

Die nachrüstbare Separationsvorrichtung ist in ihren Abmessungen von der Größe des Flüssigkeitsabscheiders, von dessen zu erwartender Durchflußmenge und dessen Aufstau im wesentlichen unabhängig und braucht nur auf den Ruhewasserspiegel des Flüssigkeitsabscheiders eingestellt zu werden.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: eine schematische Schnittdarstellung durch einen Flüssigkeitsabscheider gemäß einem 1. Ausführungsbeispiel und
- Figur 2: eine gemäß Figur 1 entsprechende Darstellung eines weiteren Ausführungsbeispiels.

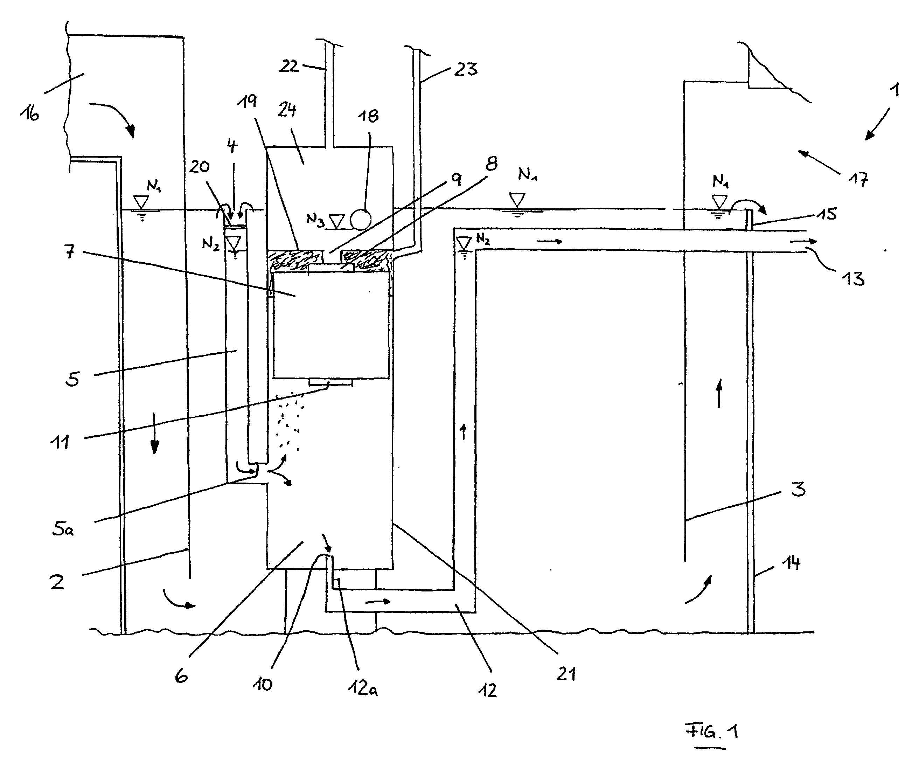

Gemäß Figur 1 weist ein Flüssigkeitsabscheider 1 einen äußeren Abscheiderbehälter 14 auf, der auf seiner gemäß Figur 1 linken Seite einen Einlauf 16 für ein zu reinigendes Öl- oder Benzin-Wasser-Gemisch besitzt. Dem Einlauf 16 ist eine vertikale, das zuströmende Flüssigkeitsgemisch in den unteren Bereich des Abscheiderbehälters 14 führende Leit- oder Tauchwand 2 zugeordnet.

Dem Einlauf 16 gegenüberliegend ist am Abscheiderbehälter 14 ein Auslauf 17 ausgebildet, dem ebenfalls in bekannter Weise eine Leit- oder Tauchwand 3 zugeordnet ist, so daß in den Auslauf 17 nur Wasser aus dem unteren Bereich des Abscheiderbehälters 14 eintreten kann. Am Auslauf 17 ist eine Auslaufblende 15 angeordnet, die den Ruhewasserspiegel N₁ im Abscheiderbehälter 14 bestimmt.

Wenn ein zu reinigendes Flüssigkeitsgemisch durch den Einlauf 16 in den Abscheiderbehälter 14 einströmt, steigt die Leichtflüssigkeit auf und sammelt sich im Abscheiderbehälter an der Wasseroberfläche in Form einer Leichtflüssigkeitsschicht an, während das gereinigte Wasser zwischen der Leit- oder Tauchwand 3 und der Wandung des Abscheiderbehälters 14 aufsteigt und über die Auslaufblende 15 hinweg in den Auslauf 17 strömt.

Im Abscheiderbehälter ist ein im wesentlichen allseitig geschlossener Separationsbehälter 21 angeordnet, dessen Innenraum durch eine unterhalb des Ruhewasserspiegels N₁ angeordnete horizontale Trennwand 19 in eine untere Separationskammer 6 und eine darüber liegende wesentlich kleinere obere Kammer 24 unterteilt ist. In der Trennwand 19 ist eine obere Abflußöffnung 9 ausgebildet, die die Separationskammer 6 mit der oberen Kammer 24 verbindet. Die obere Kammer 24 ist über ein Entlüftungsrohr 22 und die Separationskammer 6 über ein Entlüftungsrohr 23 entlüftet.

In der unteren Hälfte bzw. dem unteren Drittel der Separationskammer 6 mündet eine im wesentlichen vertikale Zulaufleitung 5, deren oberes Ende als offener Überlauf 4 ausgebildet ist, der in Höhe des Ruhewasserspiegels N₁ im Abscheiderbehälter 14 angeordnet ist. In der Zulaufleitung 5 ist ein Filter 20 zum Ausfiltern von groben Verunreinigungen angeordnet.

An dem der oberen Abflußöffnung 9 entgegengesetzten unteren Ende der Separationskammer 6 ist eine untere Abflußöffnung 10 ausgebildet, an die sich eine als S-förmiges Steigrohr ausgebildete Abflußleitung 12 anschließt, die die Wandung des Abscheiderbehälters im Bereich des Auslaufs knapp unterhalb der Auslaufblende 15 durchdringt, so daß ihre Mündung 13 außerhalb des Abscheiderbehälters 14 liegt. Die Abflußleitung 12 bestimmt das Abflußniveau N₂, das aufgrund der kommunizierenden Fluidverbindung dem Niveau in der Separationskammer 6 sowie dem Niveau in der Zulaufleitung 5 entspricht. Bei dem dargestellten Ausführungsbeispiel ist die Trennwand 19 in Höhe des Niveaus N₂ angeordnet.

In der Ablaufleitung 12 ist ein Abschnitt mit einer Querschnittsverengung 12a ausgebildet, der sicherstellt, daß die Durchflußmenge durch die Ablaufleitung 12 und somit die Separationskammer 6 sehr gering ist.

Die obere Kammer 24 steht über eine Sammelleitung 18 mit einem nicht näher dargestellten Sammelbehälter in Verbindung, der in dem Abscheiderbehälter 14 oder außerhalb von diesem angeordnet sein kann. Das Niveau N₃ gibt an, welche Höhe die Leichtflüssigkeit in der oberen Kammer 24 erreicht haben muß, bis sie über die Sammelleitung 18 abfließt.

In der Separationskammer 6 ist ein Schwimmer 7 angeordnet, der ein oberes Ventilelement 8, das mit der oberen Abflußöffnung 9 zusammenwirkt, sowie ein unteres Ventilelement 11 aufweist, das mit der unteren Abflußöffnung 10 zusammenwirken kann. Der Schwimmer 7 ist so austariert, das er die obere Abflußöffnung 9 solang verschlossen hält, bis die sich in der Separationskammer 6 gebildete Leichtflüssigkeitsschicht eine ausreichende, vorbestimmte Dicke aufweist. Wenn die vorbestimmte Dicke der Leichtflüssigkeitsschicht überschritten ist, sinkt der Schwimmer 7 in der Separationskammer 6 herab und gibt somit die oberen Abflußöffnung 9 frei.

Wenn die Leichtflüssigkeit aufgrund einer Überfüllung des Sammelbehälters nicht mehr durch die Sammelleitung 18 abfließen kann, staut sie sich in der Separationskammer 6 zurück, wodurch der Schwimmer 7 soweit absinkt, bis sein unteres Ventilelement mit der unteren Abflußöffnung 10 in Anlage kommt und diese verschließt.

Wenn ein zu reinigendes Flüssigkeitsgemisch durch den Einlauf 16 in den Abscheiderbehälter 14 einfließt, steigt der Wasserspiegel im Abscheiderbehälter 14 kurzzeitig über das Niveau des Ruhewasserspiegels N₁ an. Dadurch kann einerseits gereinigtes Wasser die Auslaufblende 15 überströmen und in den Auslauf 17 eintreten, andererseits strömt Wasser mit der an der Oberfläche im Abscheiderbehälter 14 angesammelten Leichtflüssigkeit über den Überlauf 4 in die Zulaufleitung 5. Das Flüssigkeitsgemisch strömt in der Zulaufleitung 5 nach unten und dann in die Separationskammer 6 ein, wobei am unteren Ende der Zulaufleitung 5 eine von der Flüssigkeit zu unterströmende Schwelle 5a gebildet ist. In der Separationskammer 6 steigt die Leichtflüssigkeit auf und sammelt sich unterhalb der Trennwand 19 im Bereich der oberen Abflußöffnung 9 an, durch die sie zunächst jedoch noch nicht abfließen kann, da diese durch das oberen Ventilelement 8 des Schwimmers 7 verschlossen ist. Die in den Überlauf 4 eingetretenen Wasseranteile können durch die untere Ablauföffnung 10 und die Abflußleitung 12 abfließen.

Wenn die Leichtflüssigkeitsschicht in der Separationskammer 6 die vorbestimmte Dicke erreicht hat, sinkt der Schwimmer 7 nach unten und gibt die obere Abflußöffnung 9 frei. Aufgrund der Dichteunterschiede zwischen dem Wasser und der Leichtflüssigkeit steigt die Leichtflüssigkeit durch die obere Abflußöffnung in die obere Kammer 24 bis über das Niveau N₃ auf und fließt dann über die Sammelleitung 18 in den Sammelbehälter ab. Sobald die Leichtflüssigkeitsschicht in der Separationskammer 6 die vorbestimmte Dicke wieder unterschreitet, schließt der Schwimmer 7 die obere Abflußöffnung 9 mit seinem oberen Ventilelement 8. Auf diese Weise ist sichergestellt, daß nur Leichtflüssigkeit durch die oberen Abflußöffnung 9 hindurchfließt, so daß sich im Sammelbehälter nur Leichtflüssigkeit ansammelt.

Der Querschnitt der Zulaufleitung 5 sollte relativ klein, so daß nur eine geringe Flüssigkeitsmenge durch die Separationskammer 6 fließt, unabhängig davon, ob der Zufluß des Abscheiderbehälters 14 am Einlauf 16 sehr groß oder sehr klein ist.

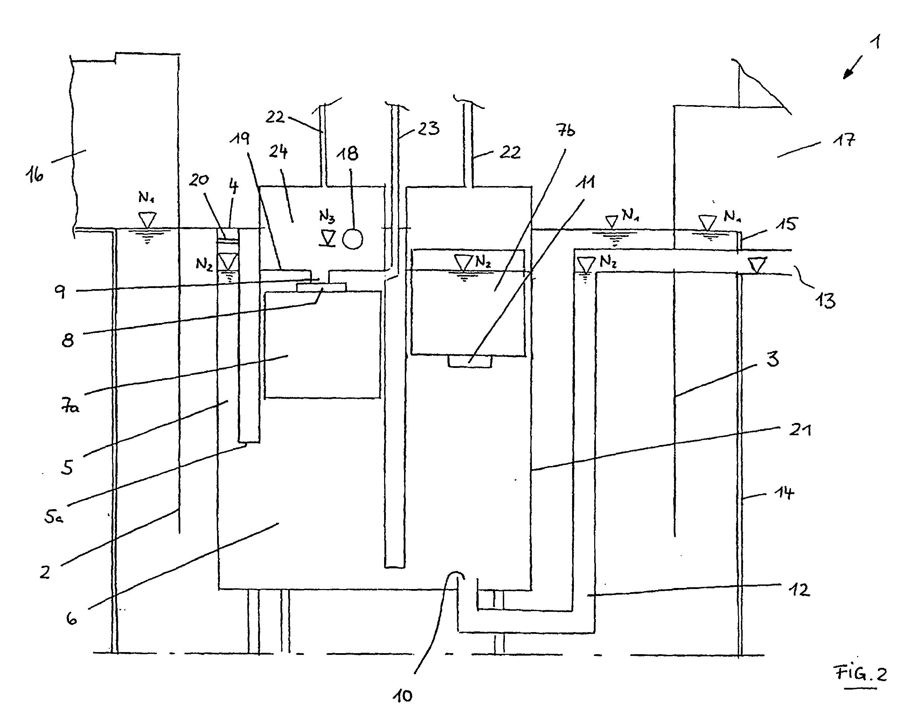

Figur 2 zeigt ein weiteres Ausführungsbeispiel der Separationsvorrichtung in einem Flüssigkeitsabscheider, wobei sich diese von dem ersten Ausführungsbeispiel nur dadurch unterscheidet, daß statt eines einzelnen Schwimmers nunmehr zwei Schwimmer 7a und 7b vorgesehen sind, wobei der Schwimmer 7a das obere Ventilelement 8 trägt, um die obere Abflußöffnung 9 solange verschlossen zu halten, bis die Leichtflüssigkeitsschicht in der Separationskammer 6 die vorbestimmte Dicke erreicht hat. Der weitere Schwimmer 7b trägt das untere Ventilelement 11, mittels dessen die untere Abflußöffnung 10 verschließbar ist, wenn die Leichtflüssigkeitsschicht in der Separationskammer 6 übermäßig anwächst.

## Patentansprüche

1. Flüssigkeitsabscheider, insbesondere zum Trennen von Gemischen aus Wasser und spezifisch leichteren Flüssigkeiten wie Öl, Benzin oder dergleichen, mit einem Abscheiderbehälter (14), der einen Einlauf (16) und einen Auslauf (17) aufweist, und mit einem Sammelbehälter, dem die abgeschiedene Leichtflüssigkeit über einen nahe dem sich im Abscheiderbehälter einstellenden Ruhewasserspiegel N₁ angeordneten Überlauf (4) zuführbar ist, wobei zwischen dem Überlauf (4) und dem Sammelbehälter eine Separationskammer (6) angeordnet ist, in der eine nochmalige Trennung der Leichtflüssigkeit vom Wasser erfolgt und die eine obere, zum Sammelbehälter führende Abflußöffnung (9) für die Leichtflüssigkeit und eine untere Abflußöffnung (10) für das Wasser aufweist, **dadurch gekennzeichnet, daß** in der Separationskammer (6) ein Schwimmer (7;7a) angeordnet ist, der die obere, zu dem Sammelbehälter führende Abflußöffnung (9) bis zum Erreichen einer vorbestimmten Dicke der Leichtflüssigkeitsschicht in der Separationskammer (6) verschlossen hält.

2. Flüssigkeitsabscheider nach Anspruch 1, **dadurch gekennzeichnet, daß** in der Separationskammer (6) ein Schwimmer (7; 7b) angeordnet ist, der die untere Abflußöffnung (10) bei Erreichen einer vorbestimmten Dicke der Leichtflüssigkeitsschicht in der Separationskammer (6) verschließt.

3. Flüssigkeitsabscheider nach Anspruch 1 oder 2, **dadurch gekennzeichnet, daß** sich vom Überlauf (4) eine Zulaufleitung (5) in die Separationskammer (6) erstreckt, die in der unteren Hälfte der Separationskammer (6) mündet.

4. Flüssigkeitsabscheider nach Anspruch 3, **dadurch gekennzeichnet, daß** in der Zulaufleitung (5) ein Filter (20) angeordnet ist.

5. Flüssigkeitsabscheider nach Anspruch 3 oder 4, **dadurch gekennzeichnet, daß** in der Zulaufleitung (5) eine untere, von der Flüssigkeit vor Eintritt in die Separationskammer (6) zu unterströmende Schwelle (5a) angeordnet ist.

6. Flüssigkeitsabscheider nach einem der Ansprüche 1 bis 5, **dadurch gekennzeichnet, daß** die untere Abflußöffnung (10) über eine Abflußleitung (12) mit der Außenseite des Abscheiderbehälters (14) verbunden ist.

7. Flüssigkeitsabscheider nach Anspruch 6, **dadurch gekennzeichnet, daß** der Ruhewasserspiegel N₂ der Abflußleitung (12) geringfügig tiefer als der Ruhewasserspiegel N₁ im Abscheiderbehälter (14) liegt.

8. Flüssigkeitsabscheider nach Anspruch 6 oder 7, **dadurch gekennzeichnet, daß** in der Abflußleitung (12) eine Querschnittsverengung (12a) ausgebildet ist.

9. Flüssigkeitsabscheider nach einem der Ansprüche 1 bis 8, **dadurch gekennzeichnet, daß** die Separationskammer (6) in einem eigenen, in den Abscheiderbehälter (14) eingesetzten Separationsbehälter (21) ausgebildet ist.

10. Flüssigkeitsabscheider nach einem der Ansprüche 1 bis 9, **dadurch gekennzeichnet, daß** der Sammelbehälter in den Abscheiderbehälter (14) eingesetzt ist.

11. Separationsvorrichtung zum Einbau in einen Flüssigkeitsabscheider. der einen Abscheiderbehälter (14), der einen Einlauf (16) und einen Auslauf (17) aufweist, und einen Sammelbehälter besitzt, dem die abgeschiedene Leichtflüssigkeit über einen nahe dem sich im Abscheiderbehälter einstellenden Ruhewasserspiegel N₁ angeordneten Überlauf (4) zuführbar ist, mit einem in dem Abscheiderbehälter einsetzbaren Separationsbehälter (21) mit einer inneren Separationskammer (6), die über eine Zulaufleitung (5) mit dem Überlauf (4) verbunden ist und eine obere, zum Sammelbehälter führende Abflußöffnung (9) für die Leichtflüssigkeit und eine untere Abflußöffnung (10) für das Wasser aufweist, **dadurch gekennzeichnet, daß** in der Separationskammer (6) ein Schwimmer (7;7a) angeordnet ist, der die obere, zu dem Sammelbehälter führende Abflußöffnung (9) bis zum Erreichen einer vorbestimmten Dicke der Leichtflüssigkeitsschicht in der Separationskammer (6) verschlossen hält.

12. Separationsvorrichtung nach Anspruch 11, **dadurch gekennzeichnet, daß** in der Separationskammer (6) ein Schwimmer (7; 7b) angeordnet ist, der die untere Abflußöffnung (10) bei Erreichen einer vorbestimmten Dicke der Leichtflüssigkeitsschicht in der Separationskammer (6) verschließt.

13. Separationsvorrichtung nach Anspruch 11 oder 12, **dadurch gekennzeichnet, daß** sich vom Überlauf (4) eine Zulaufleitung (5) in die Separationskammer (6) erstreckt, die in der unteren Hälfte der Separationskammer (6) mündet.

14. Separationsvorrichtung nach Anspruch 13, **dadurch gekennzeichnet, daß** in der Zulaufleitung (5) ein Filter (20) angeordnet ist.

15. Separationsvorrichtung nach Anspruch 13 oder 14, **dadurch gekennzeichnet, daß** in der Zulaufleitung (5) eine untere, von der Flüssigkeit vor Eintritt in die Separationskammer (6) zu unterströmende Schwelle (5a) angeordnet ist.

## Claims

1. Liquid separator, particularly for separating mixtures of water and specifically lighter liquids such as oil, petrol or the like, having a separating container (14), which has a inlet (16) and an outlet (17), and with a collecting tank, to which the separated light liquid can be supplied y means of an overflow (4) positioned close to the calm water level N₁ in the separating container and between the overflow (4) and the collecting tank is provided a separating chamber (6), where a further separation of the light liquid from the water takes place and which has an upper discharge opening (9) for the light liquid leading to the collecting tank and a lower discharge opening (10) for the water, **characterized in that** the separating chamber (6) contains a float.(7, 7a), which keeps close the upper discharge opening (9) leading to the collecting tank until a predetermined thickness of the light liquid layer is obtained in the separating chamber (6).

2. Liquid separator according to claim 1, **characterized in that** the separating chamber (6) contains a float (7, 7b), which keeps the lower discharge opening (10) when a predetermined thickness of the light liquid layer is obtained in the separating chamber (6).

3. Liquid separator according to claim 1 or 2, **characterized in that** a feed line (5) extends into the separating chamber (6) from the overflow (4) and issues into the lower half of the separating chamber (6).

4. Liquid separator according to claim 3, **characterized in that** filter (20) is placed in the feed line (5).

5. Liquid separator according to claim 3 or 4, **characterized in that** in the feed line (5) is provided a lower threshold (5a) below which the liquid flows before entering the separating chamber (6).

6. Liquid separator according to one of the claims 1 to 5, **characterized in that** the discharge opening (10) is connected by means of a discharge line (12) to the outside of the separating container (14).

7. Liquid separator according to claim 6, **characterized in that** the calm water level N2 of the discharge line (12) is slightly lower than the calm water level N1 in the separating container (14).

8. Liquid separator according to claim 6 or 7, **characterized in that** a cross-sectional reduction (12a) is formed in the discharge line (12).

9. Liquid separator according to one of the claims 1 to 8, **characterized in that** the separating chamber (6) is formed in its own separating tank (21) inserted in the separating container (14).

10. Liquid separator according to one of the claims 1 to 9, **characterized in that** the collecting tank is inserted in the separating container (14).

11. Separating device for insertion in a liquid separator, which has a separating container (14) with an inlet (16) and an outlet (17), as well as a collecting tank, to which can be supplied the separated light liquid by means of an overflow (4) located close to the calm water level N₁ in the separating container, with a separating tank (21) insertable in the separating container and having an inner separating chamber (6), connected by a feed line (5) to the overflow (4) and having an upper discharge opening (9) for the light liquid leading to the collecting tank and a lower discharge opening (10) for the water, **characterized in that** a float (7, 7a) is placed in the separating chamber (6) and keeps closed the upper discharge opening (9) leading to the collecting tank until a predetermined thickness of the light liquid layer is obtained in the separating chamber (6).

12. Separating device according to claim 11, **characterized in that** the separating chamber (6) contains a float (7, 7b), which closes the lower discharge opening (10) when a predetermined light liquid layer thickness is obtained in the separating chamber (6).

13. Separating device according to claim 11 or 12, **characterized in that** a feed line (5) extends into the separating chamber (6) from the overflow (4) and issues into the lower half of the separating chamber (6).

14. Separating device according to claim 13, **characterized in that** a filter (20) is located in the feed line (5).

15. Separating device according to claim 13 or 14, **characterized in that** in the feed line (5) is provided a lower threshold (5a) below which the liquid flows before it enters the separating chamber (6).

## Revendications

1. Séparateur de liquides, en particulier pour la séparation de mélanges d'eau et de liquides spécifiquement plus légers tels que l'huile, l'essence ou similaire, comprenant un récipient de décantation (14) présentant une entrée (16) et une sortie (17), et un récipient de collecte auquel le liquide léger séparé peut être amené au moyen d'un trop-plein (4) disposé à proximité du niveau d'eau de repos N₁ se mettant en place dans le récipient de décantation, une chambre de séparation étant disposée entre le trop-plein (4) et le récipient de collecte dans laquelle s'effectue une nouvelle séparation entre l'eau et le liquide léger et qui présente une ouverture supérieure d'écoulement (9) menant au récipient de collecte pour le liquide léger et une ouverture inférieure d'écoulement (10) pour l'eau, **caractérisé en ce que** dans la chambre de séparation (6) est disposé un flotteur (7,7a) qui maintient fermée l'ouverture supérieure d'écoulement (9) menant au réservoir de collecte jusqu'à ce que la couche de liquide léger atteigne une épaisseur prédéfinie dans la chambre de séparation (6).

2. Séparateur de liquides selon la revendication 1, **caractérisé en ce qu'**un flotteur (7, 7b) est disposé dans la chambre de séparation (6) qui ferme l'ouverture inférieure d'écoulement (10) lorsque la couche de liquide léger a atteint une épaisseur prédéfinie dans la chambre de séparation (6).

3. Séparateur de liquides selon la revendication 1 ou 2, **caractérisé en ce qu'**à partir du trop-plein (4) s'étend dans la chambre de séparation (6) une conduite d'amenée (5) qui débouche dans la moitié inférieure de la chambre de séparation (6).

4. Séparateur de liquides selon la revendication 3, **caractérisé en ce qu'**un filtre (20) est disposé dans la conduite d'amenée (5).

5. Séparateur de liquides selon la revendication 3 ou 4, **caractérisé en ce qu'**une chicane inférieure (5a) est disposée dans la conduite d'amenée (5) sous laquelle le liquide doit passer avant d'entrer dans la chambre de séparation (6).

6. Séparateur de liquides selon l'une quelconque des revendications 1 à 5, **caractérisé en ce que** l'ouverture inférieure d'écoulement (10) est reliée par un conduit d'écoulement (12) à la paroi extérieure du récipient de décantation (14).

7. Séparateur de liquides selon la revendication 6, **caractérisé en ce que** le niveau d'eau de repos N₂ dans le'conduit d'écoulement (12) se situe à un niveau légèrement inférieur au niveau d'eau de repos N₁ dans le récipient de décantation (14).

8. Séparateur de liquides selon la revendication 6 ou 7, **caractérisé en ce qu'**un rétrécissement de section (12a) est conformé dans le conduit d'écoulement (12).

9. Séparateur de liquides selon l'une quelconque des revendications 1 à 8, **caractérisé en ce que** la chambre de séparation (6) est conformée dans un récipient de séparation (21) inséré dans le récipient de décantation (14) qui lui est propre.

10. Séparateur de liquides selon l'une quelconque des revendications 1 à 9, **caractérisé en ce que** le récipient de collecte est inséré dans le récipient de décantation (4).

11. Dispositif de séparation à intégrer dans un séparateur de liquide comprenant un récipient de décantation (14) présentant une entrée (16) et une sortie (17) et un récipient de collecte dans lequel on peut amener le liquide léger séparé au moyen d'un trop-plein (4) disposé à proximité du niveau d'eau de repos N₁ s'établissant dans le récipient de décantation, comprenant un récipient de séparation (21) pouvant être inséré dans le récipient de décantation comportant une chambre de séparation (6) interne reliée au trop-plein (4) par une conduite d'amenée (5) et présentant une ouverture supérieure d'écoulement (9) menant au récipient de collecte pour le liquide léger et une ouverture inférieure d'écoulement (10) pour l'eau, **caractérisé en ce qu'**un flotteur (7, 7a) est disposé dans la chambre de séparation (6) qui maintient fermée l'ouverture supérieure d'écoulement (9) menant au récipient de collecte jusqu'à ce que la couche de liquide léger dans la chambre de séparation (6) ait atteint une épaisseur prédéfinie.

12. Dispositif de séparation selon la revendication 11, **caractérisé en ce qu'**un flotteur (7, 7b) est disposé dans la chambre de séparation (6) qui ferme l'ouverture inférieure d'écoulement (10) lorsque la couche de liquide léger dans la chambre de séparation (6) a atteint une épaisseur prédéfinie.

13. Dispositif de séparation selon la revendication 11 ou 12, **caractérisé en ce qu'**à partir du trop-plein (4) s'étend dans la chambre de séparation (6) une conduite d'amenée (5) qui débouche dans la moitié inférieure de la chambre de séparation (6).

14. Dispositif de séparation selon la revendication 13, **caractérisé en ce qu'**un filtre (20) est disposé dans la conduite d'amenée (5).

15. Dispositif de séparation selon la revendication 13 ou 14, **caractérisé en ce qu'**une chicane inférieure (5a) est disposée dans la conduite d'amenée (5) sous laquelle le liquide doit passer avant d'entrer dans la chambre de séparation (6).
